(19) **Europäisches Patentamt**
**European Patent Office**
**Office européen des brevets**

(11) **EP 1 627 136 B1**

(12) **EUROPEAN PATENT SPECIFICATION**

(45) Date of publication and mention
of the grant of the patent:
**23.01.2008 Bulletin 2008/04**

(21) Application number: **04732581.6**

(22) Date of filing: **13.05.2004**

(51) Int Cl.:
*F01N 3/023* (2006.01) *F01N 9/00* (2006.01)

(86) International application number:
**PCT/EP2004/005152**

(87) International publication number:
**WO 2004/101961 (25.11.2004 Gazette 2004/48)**

(54) **REGENERATION OF DIESEL PARTICULATE FILTERS USING LAMBDA VARIATION**

REGENERATION EINES PARTIKELFILTERS UNTER ANWENDUNG EINER LAMBDAVARIATION

REGENERATION DE FILTRES A PARTICULES DIESEL RECOURANT A LA VARIATION DE LA VALEUR LAMBDA

(84) Designated Contracting States:
**AT BE BG CH CY CZ DE DK EE ES FI FR GB GR HU IE IT LI LU MC NL PL PT RO SE SI SK TR**

(30) Priority: **14.05.2003 DE 10321676**

(43) Date of publication of application:
**22.02.2006 Bulletin 2006/08**

(73) Proprietor: **Umicore AG & Co. KG**
**63457 Hanau-Wolfgang (DE)**

(72) Inventors:
• **SPURK, Paul**
**64331 Weiterstadt (DE)**
• **PFEIFER, Marcus**
**42719 Solingen (DE)**
• **VAN SETTEN, Barry**
**63628 Bad Soden-Salmünster (DE)**
• **SÖGER, Nicola**
**60385 Frankfurt am Main (DE)**

• **HOHENBERG, Günter**
**8081 Graz (AT)**
• **GIETZELT, Christof**
**64625 Bensheim (DE)**

(74) Representative: **Stellbrink, Axel**
**Vossius & Partner**
**Siebertstrasse 4**
**81675 München (DE)**

(56) References cited:
**EP-A- 0 492 989**        **DE-A- 3 909 932**
**GB-A- 2 229 937**        **US-A- 4 211 075**
**US-A- 4 471 610**        **US-A- 4 747 264**

• **PATENT ABSTRACTS OF JAPAN vol. 0082, no. 24 (M-331), 13 October 1984 (1984-10-13) & JP 59 105915 A (TOYOTA JIDOSHA KK), 19 June 1984 (1984-06-19)**

## Description

The present invention relates to the use of engine modifications to support or create regeneration conditions of diesel particulate filters, and more particularly, the regeneration of preferably catalytically coated diesel particulate filters using lambda variation.

Today's world of internal combustion engines is dominated by two engine versions, gasoline engines and diesel engines. The ongoing development of the two combustion concepts concentrates on reducing emissions for which legal regulations to protect people and the environment are being increasingly tightened.

Compared to combustion in gasoline engines, diesel engines produce low emissions of carbon monoxide, hydrocarbons and nitrogen oxides, but also greatly increased particulate emissions which are typical of diesel engines. Examining these emissions is of particular significance so that generation, prevention and disposal of particulate emissions can be controlled. Generation and prevention of particulates in conventional diesel engines is still very difficult to influence so that the main focus is on disposal. This trend is strongly supported and required by applicable law.

One way to collect most particulates from the exhaust gas of diesel engines is to use so-called diesel particulate filters. These filters are placed in the exhaust-gas line in order to achieve a highest possible filtering rate for the particulates contained in the exhaust gas.

However, this very effective and efficient filtering process leads to a follow-on problem. That is, the filter becomes increasingly loaded with particulate matter. As a result, it is difficult for exhaust gas to flow through the filter, and a pressure increase is generated upstream of the filter which can be considered to be equivalent to increased exhaust work of the engine. This increased exhaust work is reflected in power loss and increased fuel consumption of the engine, respectively. In order to prevent an unnecessarily high increase in pressure upstream of the filter, the filter must be burned free from time to time. This is done by various regeneration measures and strategies, respectively.

It is strongly expected that the structure of the honeycomb filter, also referred to as a ceramic monolithic cell filter, will determine the technology of diesel particulate filters, hereinafter referred to as DPFs. The DPF is a filter having alternately open and closed channels. As a result of this construction, the exhaust gas is forced to flow through the porous channel walls where particulate matter can deposit on the walls. Therefore, such a filter is also called a wall-flow filter.

In addition to these honeycomb filters, there exist also filters which may have a wound construction, for example. In such a filter, the exhaust gas passes through without meeting a direct obstacle. Its construction is similar to a catalyst, i.e., without any closed channels. Compared to the honeycomb filter, which may achieve a filtering effect of more than 99%, the filtration efficiency for particulate matter is in an unacceptable low range, however.

Moreover, there are sintered metal filters, wound fiber filters, knitted fiber filters, braided fiber filters and filter papers as well as non-woven filters. Taking all parameters such as production expenditure and manufacturing cost, physical properties, filtering effect, durability etc. into account, honeycomb filters have advantages over any other filter development.

Regeneration of DPFs (without any additional modifications) is a chemical reaction which may be considered a pure oxygen regeneration (oxidation of soot). It starts at temperatures around 360 °C but only above 550 °C reaction and oxidation rates are achieved that are interesting from a practical point of view. This means that only at those temperatures sufficiently fast regeneration rates can be obtained which constitute an economically acceptable solution with respect to using the DPFs in vehicles.

The following regeneration strategies when employing diesel particulate filters are known:

- diesel particulate filters with additive support,
- CRT systems,
- catalytically coated diesel particulate filters,
- electrically supported diesel particulate filters,
- diesel particulate filters with burner systems, and
- compressed-air purged diesel particulate filters.

In catalytically coated diesel particulate filters, for example, metals are introduced into the surface of the filter. These metals serve as a catalyst lowering the soot ignition temperature below 400 °C. Using various noble metals, it is possible to reduce this initial temperature even further to a range below 350 °C. In addition, an oxidation catalyst may be provided upstream of the DPF to oxidize NO contained in the exhaust gas to $NO_2$ using the residual oxygen, thus supporting regeneration. Provided that the exhaust-gas temperatures exceed the initial temperature for a sufficiently long period of time, catalytically coated DPFs may be regenerated sufficiently well.

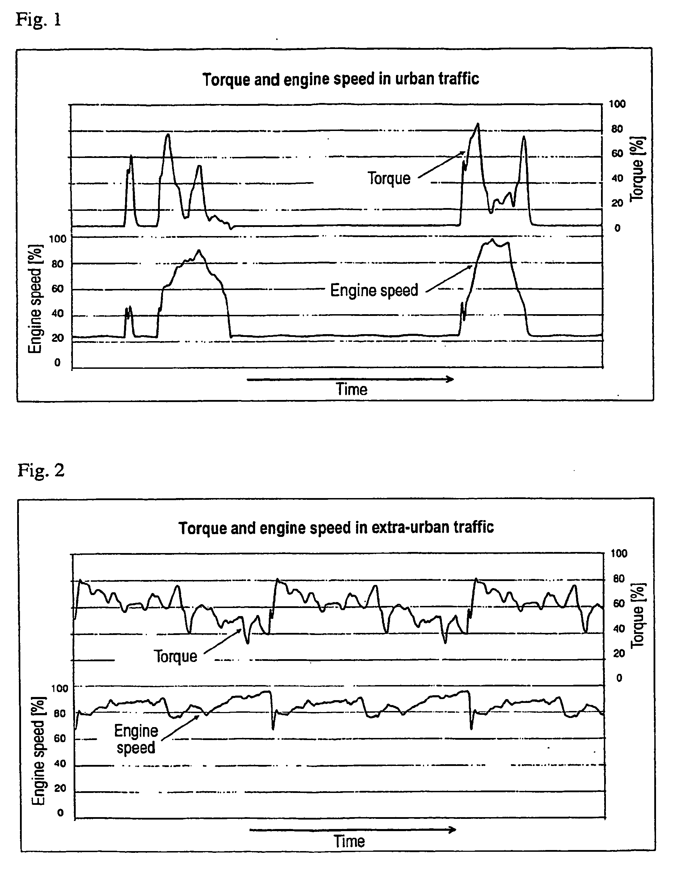

In intensive test series using catalytically coated diesel particulate filters on engine test benches, dynamic test cycles are being developed to simulate a real driving mode of a motor vehicle. The engine speed and load spectra during these tests are based on standardized exhaust-gas tests. These test cycles include both urban and extra-urban operation. The engine speed and load spectra occurring differ in that the percentage utilization of the engine in urban operation is very low (refer to Figure 1). By comparison, the engine load in extra-urban operation is relatively high. Directly related to this percentage utilization of the engine is its exhaust-gas temperature. Accordingly, high temperatures in the exhaust gas are reached at high utilization in extra-urban operation, while relatively low temperatures are reached in urban operation (refer to Figure 2).

The reason for simulating the real driving mode on the engine test bench is that the pressure loss behavior of a DPF may be predicted for later employment on a vehicle.

The engine's exhaust-gas temperatures are directly related to its percentage load (refer to Figures 1 and 2). As described above, this leads to very low temperatures in urban operation and very high temperatures in extra-urban operation. Fig. 3 depicts the temperature curve for urban operation. This curve may be plotted at any position in the exhaust-gas line and is thus regarded as a temperature spectrum in the exhaust-gas line. Fig. 4 shows the same situation for extra-urban operation.

Various engine speed levels are used for extra-urban operation during the test series. Thus, various temperature characteristics are obtained. As a result, temperature levels at which practically acceptable regeneration occurs may be determined for different filters.

The main conclusion from the results of the dynamic test cycles may be divided into two parts. One conclusion to be drawn is that the temperature spectra in extra-urban operation may be sufficient in order to force regeneration of the filter. This is achieved in an acceptable range as regards time. The second conclusion is that urban operation, due to its low temperature spectrum, fails to generate practically usable regeneration conditions.

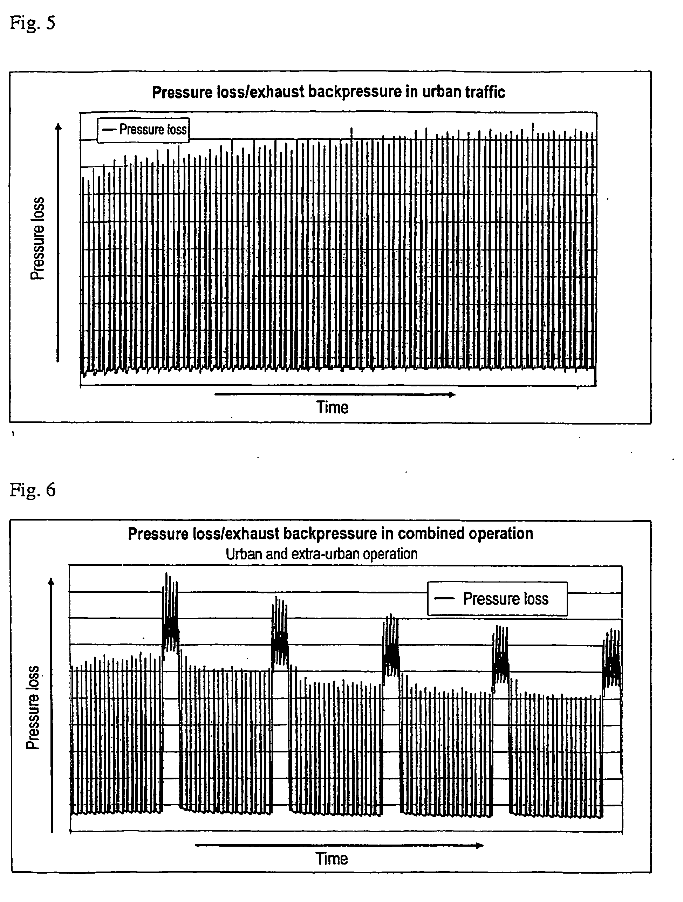

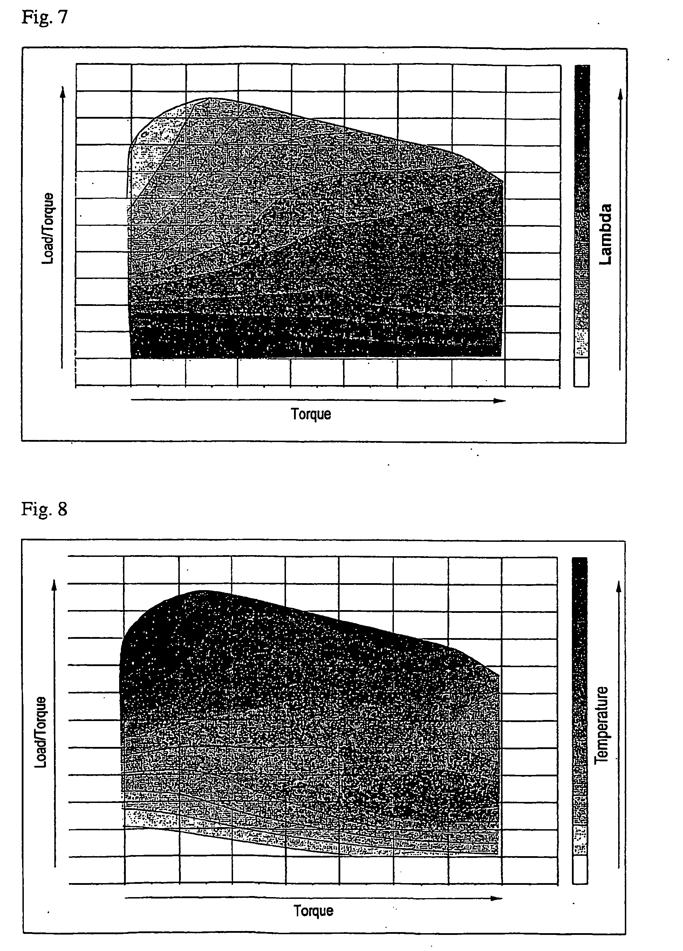

These conclusions may be understood from Figures 5 and 6. These figures indicate the pressure loss described above. In persistent urban operation, this pressure loss increases with the duration of the test due to the rising filter loading (Figure 5).

The regeneration conditions in extra-urban operation may be generated in such a satisfactory manner that a decrease in pressure loss is possible after only a short period of time. As an example, Figure 6 shows a dynamic test involving a combination of both modes of operation. During extra-urban operation, which is very brief compared to urban operation, a rapid decrease in pressure loss is generated so that a falling pressure loss may be achieved over the entire duration of the test.

In summary, satisfactory regeneration of the filter may be achieved in extra-urban operation, but not in urban operation.

GB 2 229 937 A discloses a method of regenerating a diesel particulate filter during full-load operating conditions of an internal combustion engine.

For the technology of diesel particulate filters to be interesting for all vehicle applications, the regenerative capacity must be provided in every operating mode of the corresponding vehicle. Development and application of the urban test cycle, which can simulate the driving mode for buses, garbage trucks or taxicabs, for example, has already shown that this "condition" cannot be met without any further modifications.

Accordingly, it is an object of the present invention to provide a method enabling regeneration of the filter at any point of time irrespective of the load profile (operating mode) of the vehicle. This type of regeneration will be referred to as regeneration on demand.

This object is solved with the features according to the claims.

In conventional diesel engines, quality-controlled combustion takes place. This means that the quality of the supplied mixture of air and fuel is controlled. This principle is implemented by controlling the fuel flow rate depending on the operating point of the engine (load/torque increase is achieved by raising the fuel flow rate). The air supply remains unaffected at all times. This results in different ratios of air and fuel which can be expressed using the dimensionless quantity lambda:

$$\lambda = \frac{air\ flow\ rate\ [kg/h]}{14.6 * fuel\ flow\ rate\ [kg/h]}$$

In a conventional diesel engine, the air flow rate is constant when the engine speed is fixed. Thus, lambda may only be influenced by the fuel flow rate. Combustion in diesel engines operates with excess air, i.e., more air is present than would be necessary for combustion. Therefore, lambda does not fall below 1. Further, if combustion in diesel engines falls below a lambda value of 1, it meets its functional and misfire limit, respectively. Looking at characteristic maps of diesel engines, the lowest lambda values are found at full load, as the fuel flow rate is largest in this case.

In diesel engines provided with supercharging systems for the air supplied, the air flow rate varies at constant engine speed. More air is supplied to the engine with increasing load/torque. This is called supercharging. However, in addition to supercharging, more fuel may also be supplied so that lambda varies in the characteristic map of a supercharged diesel engine as well.

Therefore, the lowest lambda values in a diesel engine **always** occur at full load. Thus, the lowest air/fuel ratios lie in this range. This results in the highest exhaust-gas temperatures. The percentage contribution of air to combustion is maximum here. This contribution/utilization decreases with increasing lambda values so that the exhaust-gas temperature falls again. The relationship between lambda values and exhaust-gas temperatures is depicted in the characteristic maps (Figures 7 and 8).

The present invention relies on the following basic idea with respect to the necessary regeneration of the diesel particulate filter and the existing problem that the conditions for sufficient regeneration exist only at full load.

During regeneration on demand, the diesel engine is not operated as a quality-controlled engine but as a quantity-controlled engine similar to the gasoline engine principle. Power requirements of the engine are satisfied not only by adding fuel, but the flow rate of the combustion mixture is controlled. In a diesel engine that is not supercharged, this must be done using a throttle valve for the supply/intake air. The ratio of air to fuel is maintained constant and low similar to a gasoline engine. When the engine is running at partial load, the throttle valve restricts the air flow rate. Thus, there is no quality control by means of the fuel flow rate, but quantity control of the mixture. As a result, the engine may be operated at a desired lambda (or lambda value). Using different throttle states for an operating point of the engine, different mixture states may be adjusted. This may be called lambda variation.

In addition to the above-mentioned throttle valve, supercharged diesel engines require a system for varying the boost pressure. Influencing the boost pressure directly varies the air flow rate. At the corresponding operating point of the engine, the boost pressure is adjusted such that the required air flow rate for the desired lambda value is supplied to the engine. This combination of a throttle valve and a system for varying the boost pressure constitutes the overall solution for supercharged diesel engines enabling a constant lambda value, or desired lambda value, to be used for the corresponding operating point of the engine in the entire characteristic map. Also, designs may be employed fulfilling both functions together, such as a regulating valve downstream of the supercharger, which closes or restricts the air passage to the engine and, at the same time, opens a passage to the environment. The idea or functional principle may also be implemented using other systems. For example, the entire air flow, rate may also be throttled upstream of the supercharger so that the resulting boost pressure is varied by means of the air flow entering the supercharger.

Influencing the air flow rate using boost pressure variation and/or throttling also creates a "variable engine". Variability refers to its power capacity. An engine that is uninfluenced reaches its maximum temperature at full load at the lowest lambda value. For regeneration on demand, this lambda value constitutes the target value for the entire load range. The boost pressure is varied (minimized) in such a way that the target lambda is run at partial load. At the same time, this is the current full load of the engine, as more load cannot be generated with the now-reduced air flow supply and the thus minimally operated target lambda value. During operation with regeneration on demand, the engine is always operated close to its currently possible full load. This inevitably produces the highest possible exhaust-gas temperature because, as has been known, when lambda is lowest, the least excess of air is present and the supplied air flow participates best in combustion (highest percentage utilization of air in the combustion chamber).

In the following, the invention will be explained in detail with reference to the accompanying drawings in which:

Figure 1 shows the percentage distribution in urban engine operation;

Figure 2 shows the percentage distribution in extra-urban engine operation;

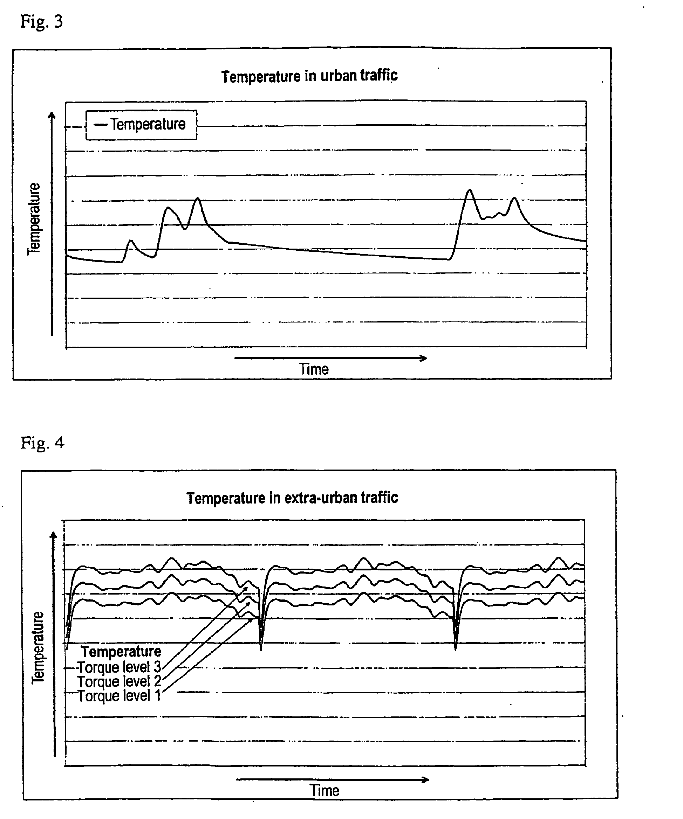

Figure 3 shows the temperature curve in urban engine operation; '

Figure 4 shows the temperature curve in extra-urban engine operation;

Figure 5 shows the pressure loss in persistent urban engine operation;

Figure 6 shows the pressure loss in combined operation;

Figure 7 shows the characteristic lambda map of a supercharged diesel engine;

Figure 8 shows the characteristic exhaust temperature map of a supercharged diesel engine;

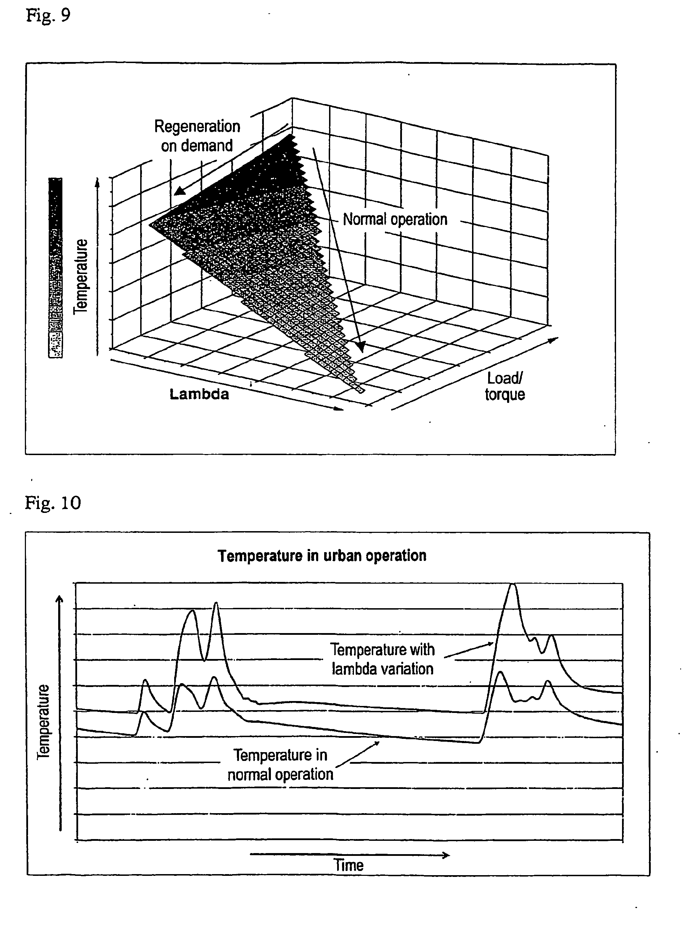

Figure 9 shows the range of lambda variation at constant engine speed;

Figure 10 shows the exhaust-gas temperature in normal operation and during lambda variation; and

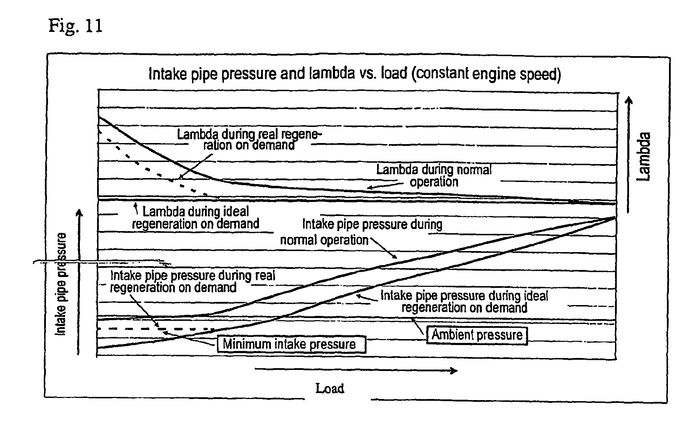

Figure 11 shows the intake pipe pressure and lambda value, respectively, versus load at constant engine speed for ideal and real regeneration on demand.

Figure 9 is a graphic representation of the relationship between exhaust-gas temperature, lambda value and engine load at constant engine speed. Normal engine operation is shown starting from full load at a low lambda value up to lower partial load at a high lambda value. The exhaust-gas temperature is decreasing considerably. During regeneration on demand, operation is at a constant, low lambda value. The exhaust-gas temperature drops only slightly with decreasing load/torque. This is due to the low energy introduced by the decreasing fuel flow rate despite lambda being kept constant. The region between these two curves (the entire area) represents the possible variation between the two operating modes (at constant engine speed).

Using regeneration on demand must not be felt by the driver. This is a general condition applying to all strategies for regenerating diesel particulate filters. This means that at no time power losses may occur. When the driver requires maximum torque, then the maximum air flow rate must be supplied. In normally aspirated engines, no throttling must be active then, and in supercharged engines, the full boost pressure must be available. When the load is reduced by the driver, boost pressure variation and throttling must respectively become active. The driver may be informed of the regeneration operation by corresponding signals in the cockpit.

Similar conditions apply on the test bench. No deviations from normal operation must be measurable for a dynamic test run with varying load requirements. Compared to the vehicle, the test bench makes it possible to apply lambda variation through test bench software. In the vehicle, the corresponding actuators must be operated by the engine electronics in accordance with the driver's request. The driver's request corresponds to the information obtained from the accelerator position at the current engine speed.

Fig. 10 compares the temperature curves of a tested lambda variation to normal operation. The dynamic test presented above to simulate urban operation was conducted in both runs. The curves indicated show the same character as the engine speed and torque curves are identical. A distinct difference in the temperature levels is apparent. The curve with lambda variation represents the highest possible temperature for the corresponding operating point as at any operating point the lowest possible lambda value is used.

Ideal regeneration on demand would be operated at a constant lambda value in the entire characteristic map, e.g., a value of about $\lambda=1.8$; thus, if possible, the lowest lambda value from the entire characteristic map of normal operation (refer to Figure 7). This will be called an ideal lambda value. The first limit/deviation from operation at the ideal lambda value is apparent from Figure 7. If in the higher engine speed ranges this ideal lambda value were used, the air flow rate would have to be reduced. This, however, would reduce the engine's power capacity, which is unacceptable. Therefore, every engine speed has its own lowest lambda value, i.e., the lambda value at the full load curve.

The second deviation from this ideal lambda value takes place at lower partial load down to zero load (also idling). In these characteristic map ranges, the engine is operated in a throttled manner. The suction pressure/negative pressure generated cannot be lowered arbitrarily. If it was lowered further in an effort to continue to operate the ideal low lambda value, then too small final compression pressures would occur. The consequence would be failure of selfignition in the combustion chamber. Combustion does not take place any longer, and the engine would ultimately cease to operate (throttle down/stall).

Thus, there is a minimum intake pipe pressure defining the engine's misfire limit. This pressure depends on the compression of the engine employed and is therefore not indicated here. This minimum intake pipe pressure is reached in the lower partial load range. Generally, this is the case for a range between about 4 and 5 bar. Reducing the load further down to zero load inevitably results in a growing lambda value, i.e., a deviation from the ideal lambda value of ideal regeneration on demand. This situation is depicted in Figure 11 showing the example of a supercharged diesel engine. In this Figure, lambda grows from about 1.8 which is the ideal lambda value to about at least 5.5 at zero load.

The use of diesel particulate filters in vehicles will be an effective technique for exhaust-gas aftertreatment in the near future. As a result, it will be possible to almost completely filter out the particulates contained in the diesel exhaust gas. Filtration of the particulate matter, however, leads to a follow-on problem, i.e., progressive clogging of the filter with particulates. This is called increasing loading. This loading forms a resistance in the exhaust-gas line perceptible through increased backpressure. The backpressure makes exhausting of exhaust gas from the engine difficult, ultimately contributing to increased fuel consumption in driving operation. To keep this increase as small as possible, the diesel particulate filter must be regenerated from time to time. To do so, the filter loading is burned off. This regeneration is achieved using different strategies known to the art. However, it is a problem to ensure regeneration for every user, i.e., for every mode of operation. When a vehicle is permanently operated at lower partial load only, regeneration cannot be performed without any additional modifications because the exhaust-gas temperature which is the decisive quantity for regeneration is permanently too low. Therefore, solutions producing a temperature-raising effect are needed.

The principle of regeneration using lambda variation presented above is a modification affecting the engine. The diesel engine operating in a quality-controlled fashion in normal operation is operated as a quantity-controlled engine during the actively initiated regeneration phase similar to a gasoline engine. This means, inter alia, that the engine can be operated at a constant lambda value. The resultant advantage is a considerably increased exhaust-gas temperature at partial load, as the high excess of air from normal operation is no longer present.

Implementation and use of this lambda variation permits vehicles which are permanently used at partial load to also perform a regeneration phase on the diesel particulate filter. Thus, a regeneration strategy not relying on additional units (such as a burner system) is provided. This can involve other advantages concerning production expenditure and manufacturing cost.

Using the principle of lambda variation explained above, regeneration conditions on the diesel particulate filter may also be created at lower partial load of the engine. This engine modification may also be supported by bypassing the intercooler, if provided in supercharged diesel engines. In this case, the air flow rate supplied to the engine is not cooled but enters the engine at a correspondingly higher temperature. Thus, the exhaust-gas temperatures will be higher compared to using lambda variation alone. Moreover, the supplied air flow may be heated. This increases the exhaust-gas temperature even further. From an engine point of view, fuel delivery adjustment and/or re-injection may also be performed. Finally, exhaust-gas recirculation may also be employed.

## Claims

1. A method of regenerating a diesel particulate filter in an exhaust-gas purification system of a diesel engine, **characterized in that** during regeneration the highest possible exhaust-gas, temperature for the corresponding operating point at partial load; of the diesel engine is reached by minimizing the ratio of air to fuel and **in that** during regeneration the ratio of air to fuel is maintained constant over the major part of the load range.

2. The method according to claim 1 wherein during regeneration the engine is operated close to its current possible full load.

3. The method according to any of the preceding claims, wherein the adjustment of the ratio of air to fuel is performed by means of a throttle valve for the supply and intake air, respectively.

4. The method according to claim 3, wherein the throttle valve restricts the air flow rate at partial load of the engine.

5. The method according to any one of the preceding claims or wherein the adjustment of the ratio of air to fuel in a supercharged diesel engine is further performed by a system for varying the boost pressure.

6. The method according to any of claims 1 or 2, wherein the adjustment of the ratio of air to fuel in a supercharged diesel engine is performed by means of a regulating valve downstream of the supercharger, the regulating valve closing or restricting the air passage to the engine and simultaneously opening a passage to the environment.

7. The method according to any of claims 1 or 2 wherein the entire air flow rate in a supercharged diesel engine is restricted upstream of the supercharger such that the resulting boost pressure is varied through the air flow entering the supercharger.

8. The method according to any of the preceding claims, wherein the air flow supplied to the engine is heated.

9. The method according to any of the preceding claims, wherein, in a supercharged diesel engine having an intercooler downstream of the supercharger, the intercooler is bypassed during regeneration.

10. Device for regenerating a diesel particulate filter in an exhaust-gas purification system of a diesel engine , particularly for performing the method according to any of the preceding claims, which is adapted to achieve the highest possible exhaust-gas temperature for the corresponding operating point of partial load of the diesel engine during regeneration by minimizing the ratio of air to fuel and to maintain the ratio of air to fuel constant over the major past of the load range during regeneration.

**Patentansprüche**

1. Verfahren zur Regeneration eines Dieselpartikelfilters in einem Abgasreinigungssystem eines Dieselmotors, **dadurch gekennzeichnet, dass** während der Regeneration durch Minimieren des Verhältnisses von Luft zu Kraftstoff die für den jeweiligen Betriebspunkt bei Teillast des Dieselmotors höchst mögliche Abgastemperatur erreicht wird, und dass während der Regeneration das Verhältnis von Luft zu Kraftstoff über den größten Teil des Lastbereichs im wesentlichen konstant gehalten wird.

2. Verfahren nach Anspruch 1, wobei während der Regeneration der Motor an seiner aktuell möglichen Volllast betrieben wird.

3. Verfahren nach einem der vorstehenden Ansprüche, wobei die Einstellung des Verhältnisses von Luft zu Kraftstoff mittels einer Drosselklappe für die zugeführte bzw. angesaugte Luft erfolgt.

4. Verfahren nach Anspruch 3, wobei bei Teillast des Motors die Drosselklappe die Luftmasse drosselt.

5. Verfahren nach einem der vorstehenden Ansprüche, wobei bei einem Dieselmotor mit Aufladung die Einstellung des Verhältnisses von Luft zu Kraftstoff ferner durch ein System zur Variation des Ladedrucks erfolgt.

6. Verfahren nach einem der Ansprüche 1 oder 2, wobei bei einem Dieselmotor mit Aufladung die Einstellung des Verhältnisses von Luft zu Kraftstoff mittels einer Stellklappe nach dem Aufladeaggregat erfolgt, wobei die Stellklappe den Luftkanal zum Motor verschließt bzw. drosselt und gleichzeitig einen Kanal zur Umgebung öffnet.

7. Verfahren nach einem der Ansprüche 1 oder 2, wobei bei einem Dieselmotor mit Aufladung die gesamte Luftmasse vor dem Aufladeaggregat gedrosselt wird, so dass der resultierende Ladedruck über die in das Aufladeaggregat eingehende Luftmasse variiert wird.

8. Verfahren nach einem der vorstehenden Ansprüche, wobei die dem Motor zugeführte Luftmasse erwärmt wird.

9. Verfahren nach einem der vorstehenden Ansprüche, wobei bei einem aufgeladenen Dieselmotor mit Ladeluftkühler nach dem Aufladeaggregat der Ladeluftkühler während der Regeneration umgangen wird.

10. Vorrichtung zur Regeneration eines Dieselpartikelfilters in einem Abgasreinigungssystem eines Dieselmotors, insbesondere zum Ausführen des Verfahrens nach einem der vorstehenden Ansprüche, die geeignet ist, während der Regeneration durch Minimieren des Verhältnisses von Luft zu Kraftstoff die für den jeweiligen Betriebspunkt bei Teillast des Dieselmotors höchst mögliche Abgastemperatur zu erreichen und das Verhältnis von Luft zu Kraftstoff über den größten Teil des Lastbereichs im wesentlichen konstant zu halten.

## Revendications

1. Procédé de régénération d'un filtre à particules diesel dans un système de purification de gaz d'échappement d'un moteur diesel,
   **caractérisé en ce que**
   au cours de la régénération, la température maximale possible des gaz d'échappement pour le point de fonctionnement correspondant à une charge partielle du moteur diesel est atteinte en réduisant à un minimum le rapport de l'air au carburant, et au cours de la régénération, le rapport de l'air au carburant est maintenu constant sur la majeure partie de la plage de charge.

2. Procédé selon la revendication 1, dans lequel, au cours de la régénération, le moteur fonctionne à proximité de sa charge complète possible présente.

3. Procédé selon l'une quelconque des revendications précédentes, dans lequel le réglage du rapport de l'air au carburant est réalisé au moyen d'un papillon de gaz pour l'alimentation et l'admission d'air, respectivement.

4. Procédé selon la revendication 3, dans lequel le papillon de gaz restreint le débit de circulation d'air à une charge partielle du moteur.

5. Procédé selon l'une quelconque des revendications précédentes, dans lequel le réglage du rapport de l'air au carburant dans un moteur diesel suralimenté est en outre effectué par un système permettant de faire varier la pression de suralimentation.

6. Procédé selon l'une quelconque des revendications 1 ou 2, dans lequel le réglage du rapport de l'air au carburant dans un moteur diesel suralimenté est effectué au moyen d'une valve de régulation située en aval du compresseur à suralimentation, la valve de régulation fermant ou restreignant le passage de l'air dans le moteur et ouvrant simultanément un passage vers l'environnement.

7. Procédé selon l'une quelconque des revendications 1 ou 2, dans lequel l'intégralité du débit de circulation d'air dans un moteur diesel suralimenté est restreinte en amont du compresseur à suralimentation de sorte que la pression de suralimentation résultante varie dans le flux d'air qui entre dans le compresseur à suralimentation.

8. Procédé selon l'une quelconque des revendications précédentes, dans lequel la circulation de l'air alimentant le moteur est chauffée.

9. Procédé selon l'une quelconque des revendications précédentes, dans lequel, dans un moteur diesel suralimenté muni d'un refroidisseur d'air de suralimentation situé en aval du compresseur à suralimentation, le refroidisseur d'air de suralimentation est évité par dérivation pendant la régénération.

10. Dispositif pour régénérer un filtre à particules diesel dans un système de purification de gaz d'échappement d'un moteur diesel, destiné en particulier à mettre en oeuvre le procédé selon l'une quelconque des revendications précédentes, le dispositif étant conçu pour obtenir la température de gaz d'échappement maximale possible pour le point de fonctionnement correspondant à une charge partielle du moteur diesel au cours de la régénération, en réduisant à un minimum le rapport de l'air au carburant, et pour maintenir le rapport de l'air au carburant constant sur la majeure partie de la plage de charge au cours de la régénération.

Fig. 1

**Torque and engine speed in urban traffic**

Fig. 2

**Torque and engine speed in extra-urban traffic**

Fig. 3

**Temperature in urban traffic**

— Temperature

Temperature

Time

Fig. 4

**Temperature in extra-urban traffic**

Temperature

Temperature
Torque level 3
Torque level 2
Torque level 1

Time

Fig. 5

**Pressure loss/exhaust backpressure in urban traffic**

Fig. 6

**Pressure loss/exhaust backpressure in combined operation**
Urban and extra-urban operation

Fig. 7

Fig. 8

Fig. 9

Fig. 10

## Fig. 11

Intake pipe pressure and lambda vs. load (constant engine speed)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2229937 A